# EUROPEAN PATENT APPLICATION

(11) **EP 4 818 494 A1**
(43) Date of publication of application: **07.10.2026**
(21) Application number: 26165899.1
(22) Date of filing: 18.03.2026
(51) Int. Cl.: F02C 7/22, G06N 3/08

(54) **FUEL NOZZLE MONITORING APPARATUS AND METHOD**

(30) Priority: 22.03.2025 US 202519087493
(71) Applicant: Pratt & Whitney Canada Corp., Longueuil, Québec J4G 1A1 (CA)
(72) Inventor: SWABY, Nadia, York (CA)
(74) Representative: Dehns

(57) **Abstract**

A method of monitoring a fuel nozzle (16) of an aircraft engine (10) includes supplying fuel to a combustor (22) of the aircraft engine (10) using the fuel nozzle (16) during operation of the aircraft engine (10), and sensing an operating condition of the aircraft engine (10) applicable to a duration during which the fuel nozzle (16) is supplying fuel to the combustor (22). A machine learning algorithm is executed to associate the operating condition of the aircraft engine (10) and the duration with a health degradation of the fuel nozzle (16). A servicing status for the fuel nozzle (16) is annunciated based on the health degradation of the fuel nozzle (16).

## Description

### TECHNICAL FIELD

The disclosure relates generally to aircraft engines, and more particularly to fuel nozzle performance in aircraft engines.

### BACKGROUND

A fuel system of an aircraft engine includes a fuel pump which delivers pressurized fuel to fuel nozzles, which in turn inject the fuel into the combustor of the aircraft engine. The fuel nozzles atomize the fuel to facilitate combustion in the combustor. Carbon deposits (i.e., coking) formed on a fuel nozzle can negatively affect its performance by altering its spray pattern. To maintain proper operation, fuel nozzles are inspected and/or serviced (e.g., cleaned) by maintenance personnel at prescribed intervals. Servicing the fuel nozzles entails a service interruption for the aircraft engine and also maintenance costs.

### SUMMARY

In one aspect, there is provided a fuel nozzle monitoring apparatus for a fuel nozzle of an aircraft engine. The apparatus includes:
one or more sensors operable to respectively sense one or more parameters indicative of an operating condition of the aircraft engine applicable to a duration during which the fuel nozzle is delivering fuel to a combustor of the aircraft engine;
an annunciator; and
one or more computers in communication with the one or more sensors and with the annunciator, the one or more computers being operable to:
   execute a machine learning algorithm that associates the operating condition of the aircraft engine and the duration with a health degradation of the fuel nozzle, the machine learning algorithm having been trained using machine learning on historical data associating previous operating conditions with previous fuel nozzle health degradations; and
   cause the annunciator to annunciate a servicing status for the fuel nozzle based on the health degradation of the fuel nozzle.

The one or more sensors may include a temperature sensor. The one or more parameters may include a temperature of the fuel upstream of the fuel nozzle sensed with the temperature sensor.

The one or more parameters may include a fuel flow rate to the fuel nozzle.

The one or more sensors may include a temperature sensor operatively connected to a body of the fuel nozzle. The one or more parameters may include a temperature of the body of the fuel nozzle sensed with the temperature sensor.

The one or more parameters may include a temperature of the fuel upstream of the fuel nozzle, a fuel flow rate to the fuel nozzle, and/or a temperature of a body of the fuel nozzle.

The one or more parameters may include a temperature of the combustor.

The one or more parameters may include an air flow rate through a space between the aircraft engine and a nacelle housing the aircraft engine.

The one or more parameters may include a temperature of air inside a space between the aircraft engine and a nacelle housing the aircraft engine.

The health degradation of the fuel nozzle may be an incremental health degradation of the fuel nozzle. The one or more computers may be operable to update a cumulative health degradation of the fuel nozzle since a previous service of the fuel nozzle by adding the incremental health degradation of the fuel nozzle to the cumulative health degradation of the fuel nozzle.

The one or more computers may be operable to, when the cumulative health degradation of the fuel nozzle has reached or exceeded a prescribed threshold, the servicing status annunciated by the annunciator includes an indication that service of the fuel nozzle is required immediately.

The servicing status annunciated by the annunciator may indicate a remaining health span of the fuel nozzle before a next service of the fuel nozzle is required.

The servicing status annunciated by the annunciator may indicate a predicted utilization amount of the fuel nozzle before a next service of the fuel nozzle is required.

Embodiments may include combinations of the above features.

In another aspect, there is provided a fuel system of an aircraft engine. The fuel system includes:
a fuel nozzle operatively connected to supply fuel to a combustor of the aircraft engine during operation of the aircraft engine;
a sensor operable to sense an operating condition of the aircraft engine applicable to a duration of operation of the aircraft engine;
one or more data processors in communication with the sensor; and
non-transitory machine-readable memory storing instructions executable by the one or more data processors and configured to cause the one or more data processors to:
   execute a machine learning algorithm to associate the operating condition of the aircraft engine and the duration with an incremental health degradation of the fuel nozzle, the machine learning algorithm having been trained using machine learning on historical data associating previous operating conditions with previous fuel nozzle health degradations;
   update a cumulative health degradation of the fuel nozzle since a previous service of the fuel nozzle with the incremental health degradation of the fuel nozzle; and
   generate an output indicative of a servicing status for the fuel nozzle based on the cumulative health degradation of the fuel nozzle.

The operating condition may include a temperature of a skin of the fuel nozzle.

The fuel system may include a display device. The instructions may be configured to cause the display device to display the servicing status for the fuel nozzle. The servicing status may include one or more of the following: a predicted number of hours of operation of the aircraft engine before a next service of the fuel nozzle is required; a percentage of a remaining health span of the fuel nozzle before a next service of the fuel nozzle is required; and a service of the fuel nozzle being required immediately.

Embodiments may include combinations of the above features.

In a further aspect, there is provided a method of monitoring a fuel nozzle of an aircraft engine. The method includes:
supplying fuel to a combustor of the aircraft engine using the fuel nozzle during operation of the aircraft engine;
sensing an operating condition of the aircraft engine applicable to a duration during which the fuel nozzle is supplying fuel to the combustor;
executing a machine learning algorithm that associates the operating condition of the aircraft engine and the duration with a health degradation of the fuel nozzle, the machine learning algorithm having been trained using machine learning on historical data associating previous operating conditions with previous fuel nozzle health degradations; and
annunciating a servicing status for the fuel nozzle based on the health degradation of the fuel nozzle.

The health degradation of the fuel nozzle may be an incremental health degradation of the fuel nozzle. The method may include incrementing a cumulative health degradation of the fuel nozzle since a previous service of the fuel nozzle with the incremental health degradation of the fuel nozzle. The servicing status for the fuel nozzle may be based on the cumulative health degradation of the fuel nozzle.

The operating condition may include a temperature of the fuel upstream of the fuel nozzle, a fuel flow rate to the fuel nozzle, and/or a temperature of a skin of the fuel nozzle.

The operating condition may include a temperature of the combustor.

The operating condition may include: an air flow rate through a space between the aircraft engine and a nacelle housing the aircraft engine; and/or a temperature of air inside the space between the aircraft engine and the nacelle.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 schematically shows an axial cross-section of an exemplary aircraft engine operatively connected to an exemplary apparatus for monitoring one more fuel nozzles of the aircraft engine;
FIG. 2 is a schematic representation of an exemplary fuel nozzle operatively connected to deliver fuel to a combustor of the aircraft engine;
FIG. 3 is a schematic representation of the apparatus for monitoring the fuel nozzle(s) of the aircraft engine;
FIG. 4 is a flow diagram of an exemplary method of monitoring the fuel nozzle(s) of the aircraft engine;
FIG. 5 is a table showing exemplary historical data for training a machine learning algorithm of the apparatus for monitoring the fuel nozzle(s);
FIG. 6 is a schematic representation of an exemplary machine learning algorithm; and
FIGS. 7A-7D are exemplary fuel nozzle servicing statuses output from the apparatus for monitoring the fuel nozzle(s).

### DETAILED DESCRIPTION

This disclosure describes apparatus and methods for monitoring the utilization of fuel nozzles and determining when they should be serviced based on their utilization. The apparatus and methods described herein may be used to provide custom (e.g., usage-based) fuel nozzle maintenance solutions that are tailored based on trends in the utilization (e.g., operating conditions) of the fuel nozzles as opposed to following a universal servicing schedule. In some embodiments, the apparatus and methods described herein may improve reliability, safety and performance of an aircraft engine by preventing inadequate (e.g., too seldom) service intervals (e.g., in situations where the fuel nozzles are used in operating conditions that are more prone to coking). On the other hand, in some embodiments, the apparatus and methods described herein may reduce unnecessary service interruptions and maintenance costs by preventing too frequent service intervals (e.g., in situations where the fuel nozzles are used in operating conditions that are less prone to cause coking). Aspects of various embodiments are described through reference to the drawings.

The term "connected" may include both direct connection (in which two elements contact each other) and indirect connection (in which at least one additional element is located between the two elements). As used herein, the singular forms "a," "an," and "the" are intended to include the plural forms as well, unless the context clearly indicates otherwise.

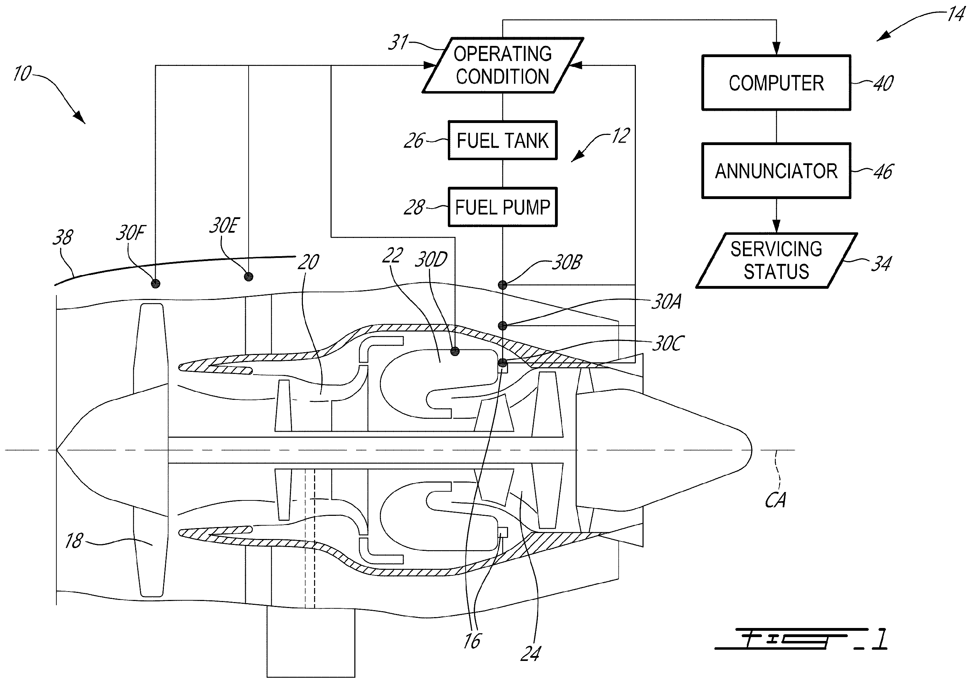

FIG. 1 schematically shows an axial cross-section view of an exemplary aircraft engine 10 (referred hereinafter as "engine 10") including fuel system 12 that includes and/or that is operatively connected to an exemplary apparatus 14 (i.e., fuel nozzle monitor) for monitoring one or more fuel nozzles 16 of fuel system 12. In some embodiments, engine 10 may include a gas turbine engine of a turbofan type as shown in FIG. 1, and suitable for use in subsonic flight. Engine 10 may include, in serial flow communication, fan 18 through which ambient air is propelled, multistage compressor 20 for pressurizing the air, combustor 22 (i.e., combustion chamber) in which the compressed air is mixed with fuel and ignited for generating an annular stream of hot combustion gases, and turbine section 24 for extracting energy from the combustion gases. Combustor 22 may extend annularly completely around central axis CA of engine 10. Engine 10 may include a plurality of fuel nozzles 16 that are angularly distributed about central axis CA and that are operatively connected to deliver fuel to different angular sectors of combustor 22. The following description refers to fuel nozzle 16 in the singular for clarity but it is understood that fuel system 12 may include a plurality of fuel nozzles 16, and apparatus 14 may monitor one, two or more (e.g., all) of those fuel nozzles 16.

In other embodiments, engine 10 may include another type of thermal (e.g., combustion) aircraft engine such as a turboprop engine, a turboshaft engine, a turbojet engine, a piston engine or a Wankel engine for example. Engine 10 may be mounted to a fixed-wing aircraft or to a rotary-wing aircraft such as a helicopter. Engine 10 may be configured to propel the aircraft and may be mounted to a wing or a fuselage of the aircraft for example. Alternatively, engine 10 may be an auxiliary power unit (APU) disposed inside an aircraft's tail and perform non-propulsion functions exclusively.

Fuel system 12 may include fuel tank 26 containing fuel in liquid form and fuel pump 28 delivering fuel from fuel tank 26 to fuel nozzle 16. Fuel tank 26 may be disposed remotely of engine 10 and be disposed inside a wing and/or inside a fuselage of the aircraft to which engine 10 is mounted. Fuel pump 28 may be disposed inside or outside of fuel tank 26. Fuel system 12 may optionally include additional items that are not shown herein such as a fuel heater, a fuel filter, a fuel metering unit (FMU), one or more valve(s), and a fuel manifold distributing the fuel to a plurality of fuel nozzles 16.

Fuel nozzle 16 may require periodic servicing (e.g., inspection and/or cleaning) after some utilization to avoid excessive fouling by carbon deposits on the nozzle tips that could cause malfunction and/or clogging of fuel nozzle 16. Carbon deposits may interfere with the flow of fuel delivered by fuel nozzle 16 and may consequently alter the spray characteristics of fuel nozzle 16. Altering the spray characteristics of fuel nozzle 16 such as a spray distribution angle, droplet size, velocity distribution and evaporation may alter the combustion performance inside of combustor 22. The spray characteristics of fuel nozzle 16 may also affect safety parameters, combustion efficiency and pollutant emissions. A desirable atomization of the fuel delivered by fuel nozzle 16 may promote a reduced amount of ignition energy required to initiate and sustain combustion.

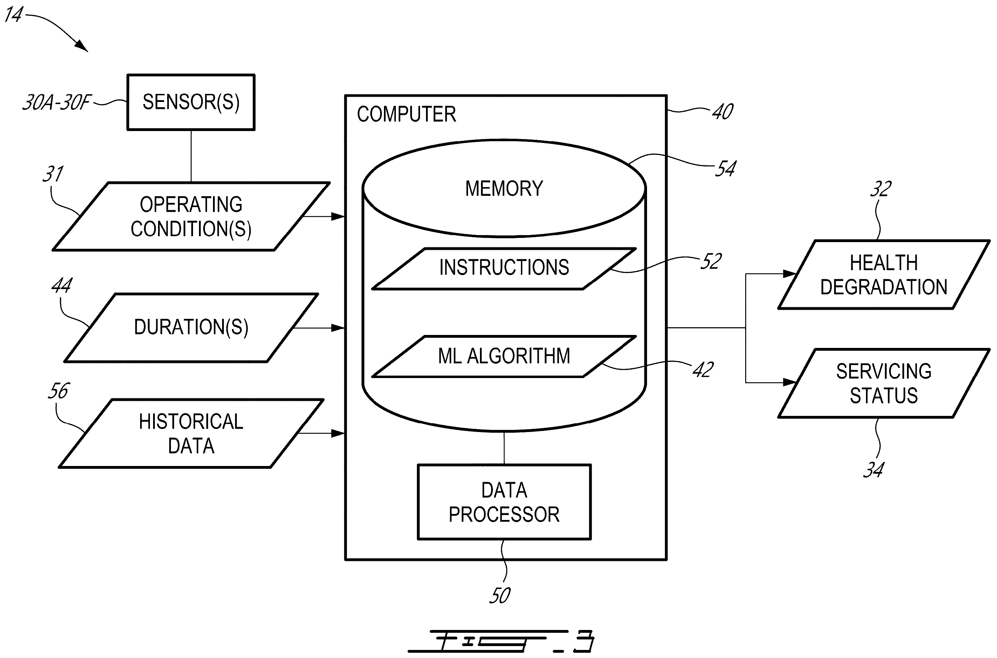

Apparatus 14 for monitoring fuel system 12 may include one or more sensors 30A-30F respectively operable to sense one or more parameters that are indicative of operating condition 31 of engine 10 which is applicable to a duration during which fuel nozzle 16 is delivering fuel to combustor 22 of engine 10. Operating condition 31 of engine 10 and the applicable duration 44 (shown in FIG. 3) for operating condition 31 may be used by apparatus 14 to determine health degradation 32 (shown in FIG. 3) and/or servicing status 34 associated with fuel nozzle 16. Operating condition(s) 31 of engine 10 may be indicative of a rate of degradation of the performance and health span of fuel nozzle 16. For example, some operating conditions 31 (e.g., flight and ambient conditions) may be more prone to coking and require more frequent cleaning of fuel nozzle 16, and some operating conditions 31 may be less prone to coking and require less frequent cleaning of fuel nozzle 16. Operating condition 31 of engine 10 may be used by apparatus 14 to facilitate custom (e.g., usage-based) maintenance solutions (e.g., service intervals) that are tailored based on trends in the utilization (e.g., operating conditions 31) of fuel nozzle 16 as opposed to following a universal servicing schedule. In some situations, apparatus 14 may facilitate such custom maintenance solutions based on an accumulation of different amounts of health degradation 32 respectively associated with one or a plurality of different operating conditions 31 experienced by fuel nozzle 16.

In some embodiments, operating condition 31 monitored by apparatus 14 may be characterized via one or more sensed and/or derived parameters. Sensed parameters may be measured/acquired with one or more sensors 30A-30F. Sensor(s) 30A-30F may be in communication with computer 40 and may be operable to characterize operating condition 31 of engine 10 and provide signal(s) characterizing operating condition 31 to computer 40. Alternatively or in addition, operating condition 31 monitored by apparatus 14 may be characterized by way of one or more derived (e.g., calculated, inferred, synthesized) parameters. In some embodiments, operating condition 31 monitored by apparatus 14 may be characterized by a combination of one or more sensed parameters in combination with one or more derived parameters.

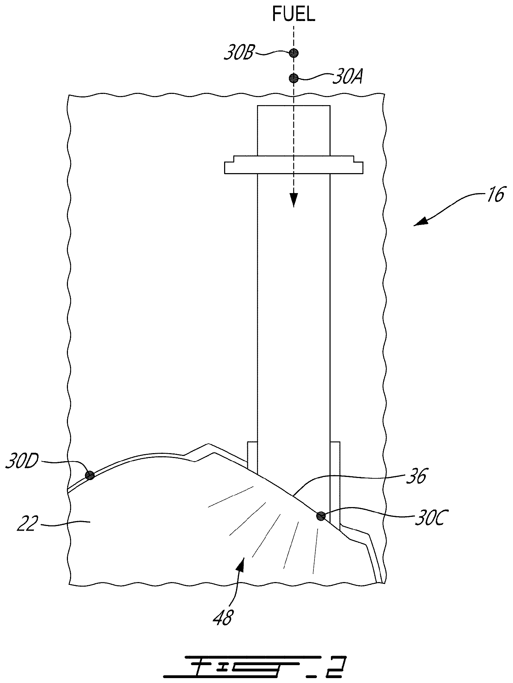

Parameters that may be indicative of a health span of fuel nozzle 16 may include one or more of the following: a temperature of the fuel being delivered to and/or running through fuel nozzle 16; a flow rate of the fuel that is running through fuel nozzle 16; a temperature of the body (e.g., skin 36) (shown in FIG. 2) of fuel nozzle 16; a temperature of combustor 22; a temperature of the air inside a space between engine 10 and nacelle 38 housing engine 10; and a flow rate of the air inside a space between engine 10 and nacelle 38 housing engine 10. In some embodiments, apparatus 14 may consider only one of those parameters individually to determine health degradation 32 and/or servicing status 34. In some embodiments, apparatus 14 may consider a plurality of those parameters in combination to determine health degradation 32 and/or servicing status 34. In some embodiments, apparatus 14 may consider one or more of the parameters disclosed herein in combination with one or more other parameters to determine health degradation 32 and/or servicing status 34.

Sensor 30A may include a temperature sensor (e.g., thermocouple, resistance temperature detector (RTD)) operable to sense a temperature of the fuel at a location upstream of fuel nozzle 16. In some embodiments, sensor 30A may be operable to sense the temperature of the fuel at a location between fuel nozzle 16 and fuel pump 28. In some embodiments, sensor 30A may disposed at a location that is closer to fuel nozzle 16 than to fuel pump 28. In some embodiments, sensor 30A may be operable to sense the temperature of the fuel at a location that is immediately upstream of fuel nozzle 16 and may sense the temperature of the fuel that is entering fuel nozzle 16. In some embodiments, the temperature of the fuel may be inferred based on one or more other parameters of engine 10 such as the temperature at another location within engine 10 that is related to the temperature of the fuel being supplied to fuel nozzle 16.

Sensor 30B may include a suitable (e.g., obstruction type, inferential type) flowmeter operable to sense a flow rate of the fuel that is delivered to fuel nozzle 16. In some embodiments, the flow rate of the fuel may be inferred based on one or more other parameters of engine 10. For example, in some embodiments, the flow rate of fuel may be inferred from the fuel flow rate commanded from the FMU of fuel system 12.

Sensor 30C may include a temperature sensor (e.g., thermocouple, RTD) operatively connected to a body (e.g., skin) of fuel nozzle 16 so that a temperature of skin 36 (shown in FIG. 2) of fuel nozzle 16 may be sensed directly by sensor 30C. Alternatively, the temperature of skin 36 may be inferred based on a related temperature of another location on the body of fuel nozzle 16, based on another related temperature that is not necessarily on fuel nozzle 16, and/or based on another related parameter of engine 10.

Sensor 30D may include a temperature sensor (e.g., thermocouple, RTD) operatively connected to combustor 22 so that a temperature of a wall or other part of combustor 22 may be sensed using sensor 30D. Alternatively, the temperature of the combustor wall may be inferred based on a related temperature, and/or based on another related parameter of engine 10.

Sensor 30E may include a temperature sensor (e.g., thermocouple, RTD) operable to sense a temperature of the air inside a space between engine 10 and nacelle 38 housing engine 10. Alternatively, the temperature of the air inside the space between engine 10 and nacelle 38 may be inferred based on a related temperature, and/or based on another related parameter of engine 10.

Sensor 30F may include a sensor (e.g., pitot tube, pressure transducer) operable to sense a flow rate of the air inside a space between engine 10 and nacelle 38 housing engine 10. In some embodiments, sensors 30E and 30F may be integrated into a combined sensing probe. In some embodiments, the flow rate of the air inside the space between engine 10 and nacelle 38 may be inferred based on another related parameter of engine 10.

Apparatus 14 may include one or more computers 40 (referred hereinafter in the singular) communication with one or more (e.g., all) of sensors 30A-30F. Computer 40 may be operable to execute machine learning (ML) algorithm 42 (shown in FIG. 3) that associates the operating condition 31 (e.g., as represented by one or more of the above parameters) of engine 10 and duration 44 (shown in FIG. 3) with health degradation 32 of fuel nozzle 16.

Apparatus 14 may include annunciator 46 configured to generate an output indicative of health degradation 32 of fuel nozzle 16 and/or an output indicative of servicing status 34 of fuel nozzle 16. Computer 40 may be operatively connected to (e.g., in communication with) annunciator 46. In response to computing health degradation 32, computer 40 may cause annunciator 46 to output a corresponding servicing status 34 that is based on health degradation 32.

Some or all elements of apparatus 14 may be located onboard the aircraft that includes engine 10. In some embodiments, some elements of apparatus 14 may be located remotely of the aircraft such as at a ground-based facility for example. Operating condition 31 and the applicable duration 44 may be communicated to computer 40 via wired or wireless communication. Annunciator 46 may communicate with computer 40 via wired or wireless communication. Annunciator 46 may be disposed onboard the aircraft and serve to notify the flight crew with health degradation 32 and/or servicing status 34 if needed.

In some embodiments, annunciator 46 may include a display device or other indicator disposed on the flight deck of the aircraft and operable to alert the flight crew via a visual indication. In some embodiments, annunciator 46 may include a loudspeaker operable to alert the flight crew via an aural indication. Alternatively or in addition, annunciator 46 may be disposed at the ground-based facility and may serve to alert maintenance personnel via visual and/or aural indication(s). In some embodiments, computer 40 and/or annunciator 46 may be incorporated in a desktop computer or a portable electronic device such as a laptop computer or a smart phone for example.

In some embodiments, operating condition 31 and duration 44 of engine 10 may be considered by computer 40 during the monitoring of fuel system 12. A plurality of operating conditions 31 and durations 44 may be considered to quantify a cumulative utilization of engine 10 and hence a cumulative health degradation of fuel nozzle 16 since entry into service or since the last servicing of fuel nozzle 16 for example. Health degradation 32 may characterize an amount of the service life or health span of fuel nozzle 16 that has been consumed and may be indicative of when the next servicing of fuel nozzle 16 is expected to be due based on the utilization of engine 10.

Operating condition 31 and duration 44 may be tracked by an electronic engine controller (EEC) of engine 10 or via other means, and may be communicated to computer 40 via wired or wireless communication. The EEC may control one or more aspects of the performance of engine 10. Alternatively, operating condition 31 and duration 44 may be determined by or provided directly to computer 40. In various embodiments, computer 40 may be the EEC of engine 10 or may be separate from the EEC of engine 10.

In embodiments where computer 40 is located remotely of the aircraft to which engine 10 is mounted, operating condition 31 may be communicated to computer 40 via a wireless communication network either during flight of the aircraft or when the aircraft is on the ground. In various embodiments, monitoring of fuel nozzle 16 by computer 40 may be performed substantially in real-time as the aircraft is in operation. Alternatively, monitoring of fuel nozzle 16 by computer 40 may be performed shortly after the completion of a flight cycle and before the initiation of a next flight cycle. As explained further below, computer 40 may determine health degradation 32 of fuel nozzle 16 and cause annunciator 46 to output servicing status 34 if/when appropriate.

FIG. 2 is a schematic representation of an exemplary fuel nozzle 16 operatively connected to deliver fuel to combustor 22 of engine 10. Fuel nozzle 16 may be configured to delivery fuel spray 48 having a prescribed spray pattern into combustor 22. FIG. 2 also shows exemplary locations of sensors 30A-30D. Temperature sensor 30A may be installed to sense the temperature of the fuel at a location upstream of fuel nozzle 16. Sensor 30B (e.g., flow meter) may be installed to sense a flow rate of the fuel that is delivered to fuel nozzle 16. Temperature sensor 30C may be installed to sense the temperature of the body (e.g., skin 36) of fuel nozzle 16. Temperature sensor 30D may be installed to sense the temperature of a wall of combustor 22, which may be indicative of the temperature inside of combustor 22.

FIG. 3 is a schematic representation of apparatus 14 for monitoring fuel nozzle(s) 16 of engine 10. Computer 40 may include one or more data processors 50 (referred hereinafter in the singular as "processor 50") and non-transitory machine-readable memory(ies) 52 (referred hereinafter in the singular). Computer 40 may be configured to generate an output (i.e., signal, data) indicative of health degradation 32 and/or servicing status 34 based on one or more operating conditions 31 and one or more corresponding durations 44. Computer 40 may optionally also perform other tasks. The output(s) from computer 40 may include one or more (e.g., electronic or electric) signals communicated to annunciator 46 for causing (i.e., triggering) annunciator 46 to generate an annunciation indicative of health degradation 32 and/or service status 34. Such annunciation(s) may include a visual or aural indication (e.g., textual message, graphical icon, blinking light, audible alarm, chime, spoken message). Computer 40 may perform one or more procedures or steps defined by instructions 52 (e.g., software, program code) stored in memory 54 and executable by processor(s) 50 to generate the output from computer 40.

Processor(s) 50 may include any suitable device(s) configured to cause a series of steps to be performed by computer 40 so as to implement a computer-implemented process such that instructions 52, when executed by computer 40 or other programmable apparatus, may cause the functions/acts specified in the methods described herein to be executed. Processor(s) 50 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 54 may include any suitable machine-readable storage medium. Memory 54 may include non-transitory computer-readable storage medium such as, for example, but not limited to, an electronic, magnetic, optical, electromagnetic, infrared, or semiconductor system, apparatus, or device, or any suitable combination of the foregoing. Memory 54 may include any storage means (e.g., devices) suitable for retrievably storing machine-readable instructions 52 executable by processor(s) 50. Memory 54 may store one or more ML algorithms 42 that are based (i.e., trained) on historical data 56 characterizing the health span of fuel nozzle 16. ML algorithm 42 may be incorporated in instructions 52. ML algorithm 42 may include a computer-implemented digital model trained using ML.

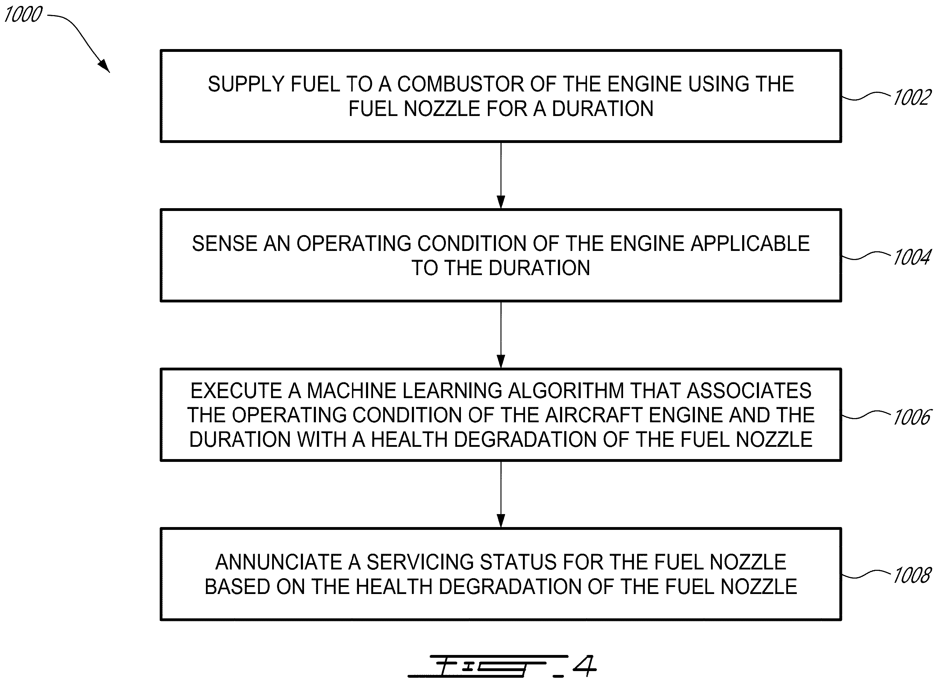

FIG. 4 is a flow diagram of an exemplary method 1000 of monitoring one or more fuel nozzles 16 of engine 10 or of another engine 10. Method 1000 may be performed using apparatus 14 or using another apparatus. For example, machine-readable instructions 52 may be configured to cause computer 40 to perform at least part of method 1000. Method 1000 may include other actions disclosed herein. Method 1000 may include elements of engine 10, of fuel system 12 and/or of apparatus 14. In various embodiments, method 1000 may include:
supplying fuel to combustor 22 of engine 10 using fuel nozzle 16 during operation of engine 10 (block 1002);
sensing operating condition 31 of engine 10 applicable to duration 44 during which fuel nozzle 16 is supplying fuel to combustor 22 (block 1004);
executing ML algorithm 42 that associates operating condition 31 of engine 10 and duration 44 with health degradation 32 of fuel nozzle 16 (block 1006); and
annunciating a servicing status for the fuel nozzle based on the health degradation of the fuel nozzle (block 1008).

In some embodiments of method 1000, ML algorithm 42 may have been trained (and optionally continue to be trained through active learning) using ML on new entries (i.e., new observations) added to historical data 56 associating previous operating conditions and previous durations with previous fuel nozzle health degradations.

In some embodiments of method 1000, health degradation 32 that is determined at block 1006 may be a cumulative health degradation since a last servicing of fuel nozzle 16 based on an average operating condition 31 over the entire duration 44 of operation of engine 10 since the last servicing of fuel nozzle 16.

In some embodiments, method 1000 may be used to determine a cumulative health degradation that is based on an accumulation of different incremental health degradations 32 respectively associated with a plurality of different operating conditions 31 experienced over different durations 44 by fuel nozzle 16. For example, health degradation 32 that is determined at block 1006 may be an incremental health degradation 32 applicable to operating condition 31 for duration 44 that is shorter than the operating time of engine 10 since the last servicing of fuel nozzle 16. Accordingly, the execution of blocks 1002, 1004 and 1006 of method 1000 may be repeated to determine a plurality of incremental health degradations 32 than may be combined (e.g., added) together to define a cumulative health degradation that more closely represents the actual utilization of fuel nozzle 16 since the last servicing of fuel nozzle 16 or for another time span.

In situations where health degradation 32 of fuel nozzle 16 is an incremental health degradation 32, method 1000 may include repeatedly updating (i.e., incrementing) a cumulative health degradation of fuel nozzle 16 since a previous service of fuel nozzle 16 by adding the incremental health degradation 32 of fuel nozzle 16 determined at block 1006 to the cumulative health degradation of fuel nozzle 16. Servicing status for fuel nozzle 16 may be based on the cumulative health degradation of fuel nozzle 16.

In some embodiments, annunciating servicing status 34 at block 1008 may be performed each time method 1000 is executed. Alternatively, annunciating servicing status 34 at block 1008 may be performed when the cumulative health degradation of fuel nozzle 16 has reached or exceeded a prescribed threshold. Such threshold may be selected to indicate that service of fuel nozzle 16 is required immediately or is estimated to be required within a prescribed timeframe. Such threshold may be selected based on a prescribed performance level associate with the current amount of cumulative health degradation. Such threshold may be selected to prevent a potential malfunction and promote reliability of engine 10.

The operating condition of engine 10 may be characterized by one or more operating parameters of engine 10 such as: a temperature of the fuel delivered to and/or running through fuel nozzle 16; a flow rate of the fuel that is running through fuel nozzle 16; a temperature of the body (e.g., skin 36) of fuel nozzle 16; a temperature of combustor 22; a temperature of the air inside a space between engine 10 and nacelle 38 housing engine 10; and/or a flow rate of the air inside a space between engine 10 and nacelle 38 housing engine 10.

In some embodiments, method 1000 may include servicing fuel nozzle 16 at the appropriate time by service personnel based on health degradation 32. Servicing may include inspecting fuel nozzle 16 and optionally cleaning fuel nozzle 16 if needed. Cleaning fuel nozzle 16 may include uninstalling fuel nozzle 16 from engine 10, immersing the tip of fuel nozzle 16 into a liquid cleaning agent (e.g., solvent) and (e.g., manually) brushing the tip of fuel nozzle 16 with a brush having non-metallic bristles to loosen and dislodge carbon debris from the tip of fuel nozzle 16. Alternatively or in addition, cleaning fuel nozzle 16 may be include ultrasonically cleaning the tip of fuel nozzle 16 in the liquid cleaning agent to loosen and dislodge carbon debris from the tip of fuel nozzle 16. Fuel nozzle 16 may be reinstalled into engine 10 after cleaning and engine 10 may be returned to operation.

Further aspects of method 1000 are described below in reference to the subsequent figures.

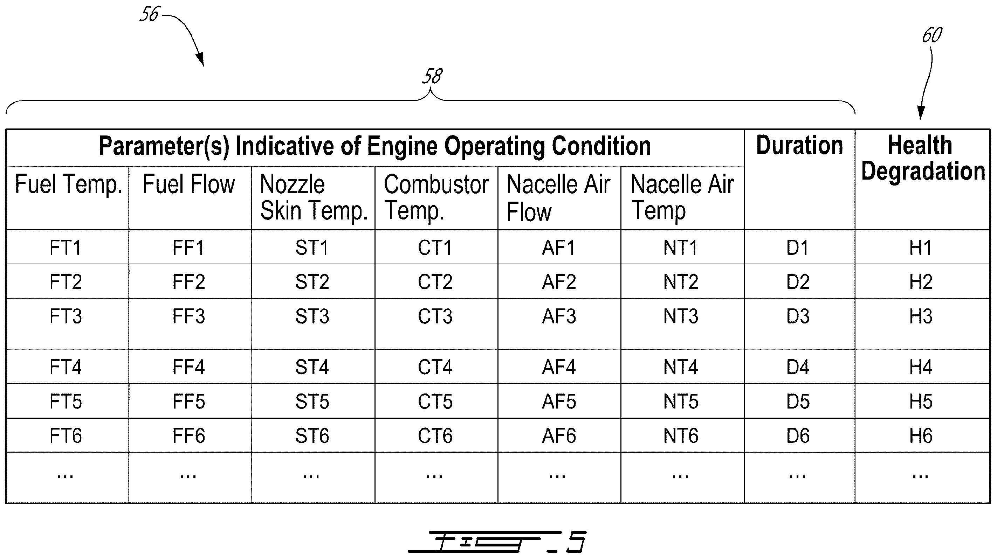

FIG. 5 is a table showing exemplary digital historical data 56 for training ML algorithm 42 of apparatus 14 for monitoring fuel nozzle 16. Historical data 56 may include a plurality of entries each including a previous operating condition, an applicable previous duration (D1-D6) for the operating condition, and a previous health degradation 32 (H1-H6) exhibited during the previous operating condition and previous duration.

Previous operating conditions may be defined by one or more sensed or derived parameter as explained above. Such parameters may include one or more of the following: a fuel temperature (FT1-FT6) of the fuel being delivered to fuel nozzle 16, a fuel flow (FF1-FF6) to fuel nozzle 16, a skin temperature (ST1-ST6) of fuel nozzle 16, a combustor temperature (CT1-CT6), a nacelle air flow (AF1-AF6), and a nacelle air temperature (NT1-NT6). Historical data 56 may be populated experimentally by assessing actual previous health degradations respectively associated with the different previous operating conditions and previous durations. In some embodiments, historical data 56 may include data directly from engine 10 and/or from one or more other engines. In some embodiments, historical data 56 may include data from a fleet of engines 10. In some embodiments, historical data 56 may include data from one or more other engines of a same type and/or family as engine 10, and/or otherwise relevant to engine 10.

In some embodiments, previous durations D1-D6 may each define a time span from a previous servicing of the fuel nozzle so that each entry (e.g., row) in historical data 56 may represent an assessment from the same baseline (i.e., a freshly cleaned fuel nozzle). Alternatively or in addition, historical data 56 may include entries that represent assessments from different baselines to capture cumulative (e.g., nonlinear) factors in health degradation.

Previous health degradations (H1-H6) may include a qualitative characterization and/or a quantitative characterization. For example, the previous health degradations may be indicative of a spray performance that is evaluated experimentally following the applicable previous duration. The spray performance can be characterized through visual inspection by maintenance personnel for example and/or using a laser diffraction system such as the Spraytec^{™} system sold under the trade name MALVERN PANALYTICAL. Such laser diffraction system may allow measurement of spray particle and spray droplet size distributions in real-time.

An indication of health degradation may consider one or more spray characteristics (e.g., atomization, uniformity) of the spray pattern. The spray pattern may be characterized as a having a good uniform spray quality (e.g., ideal "as-cleaned" performance) or as exhibiting other non-ideal characteristics. For example, a qualitative characterization of the health degradation may include: an amount (e.g., percentage) of "streakiness" representing a variation in spray quantity between different parts of a spray cone and appearing as lighter or darker streaks in the spray characterized using laser diffraction; an amount (e.g., none, light, medium, heavy) of "spitting" where relatively large drops of non-atomized fuel occur intermittently and usually on or near the outer boundary of the spray cone; an amount (e.g., none, light, medium, heavy) of "drooling" where relatively large drops of non-atomized fuel form on the face of the fuel nozzle; a size (e.g., none, small, medium, large) of one or more "voids" representing one or more areas of the fuel spray showing a discontinuity in fuel flow such as an air gap for example; and/or an amount (e.g., none, light, medium, heavy) of "skewness" characterizing a spray condition that is not centered about the fuel nozzle.

In some embodiments, an indication of health degradation may consider one or more spray characteristics evaluated using laser diffraction or other means and include a value selected to indicate a degree of severity of the health degradation applicable to that duration and operating condition. The value may be based on a difference between the ideal "as-cleaned" condition of the fuel nozzle and the actual inspected condition of the fuel nozzle. For example, such value may be one of "NONE", "MILD", "FAIR" and "SEVERE" as indicating the amount of health degradation. As another example, a numerical health degradation score (e.g., from 1 meaning no degradation to 10 meaning severe degradation) may be assigned based on one or more spray characteristics evaluated using laser diffraction or other means. Alternatively or in addition, the value may be selected based on an amount of carbon deposit that is found on the face of the fuel nozzle without necessarily evaluating the flow characteristics of the fuel nozzle. The selection of the value may be performed through visual inspection by a human expert and/or through image capture and analysis/classification by a computer for example.

In some embodiments, an indication of health degradation may include a numerical percentage value of the health span of the fuel nozzle that has been expended during that duration and at that operating condition. The percentage value may be based on a difference between the ideal "as-cleaned" condition of the fuel nozzle and the actual "as-inspected" condition of the fuel nozzle. The percentage value may be based on one or more spray characteristics evaluated using laser diffraction or other means, and/or an amount of carbon deposit that is found on the face of the fuel nozzle for example. The percentage value may be assigned manually by a human expert and/or automatically using a computer.

The indication of health degradation may be based on a predefined schedule correlating flow characteristics described above and/or carbon deposit amounts to numerical values.

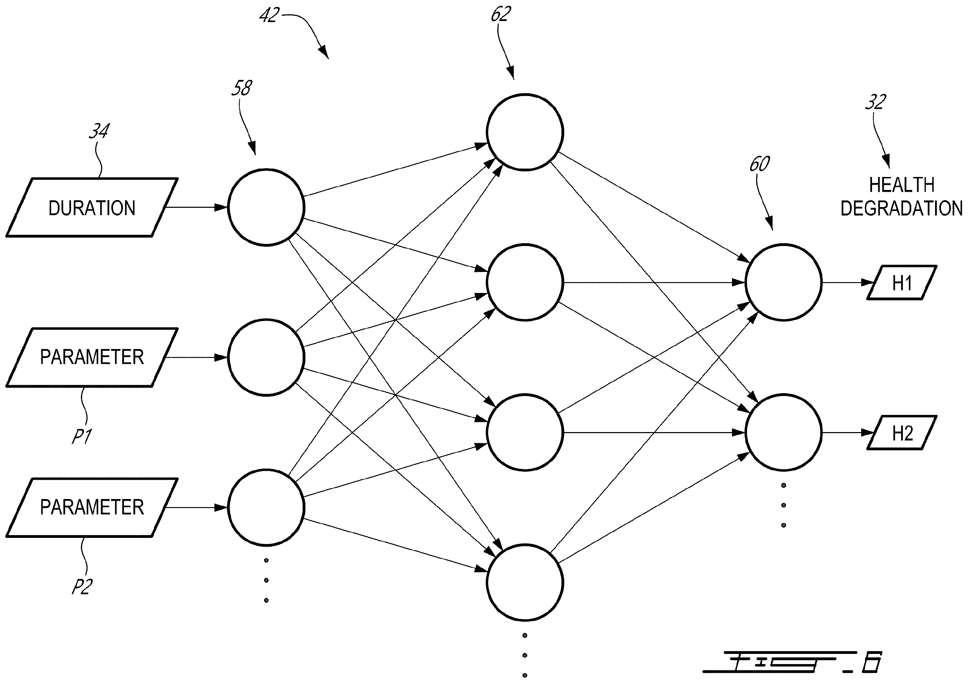

FIG. 6 schematically shows an exemplary ML algorithm 42 that relates amount of duration 44 and operating condition 31 defined by one or more parameters P1, P2 to health degradation 32. ML algorithm 42 may be executed as part of method 1000. ML algorithm 42 may be trained using supervised ML on historical data 56. In some embodiments, ML algorithm 42 may be pre-trained and provided to computer 40. In some embodiments, computer 40 may be used to train ML algorithm on historical data 56.

ML algorithm 42 may include one or more suitable artificial intelligence models. In some embodiments, ML algorithm 42 may include a trained artificial neural network (ANN). Instructions 52 may be executable by processor 50 and configured to cause processor 50 to use ML algorithm 42, duration 44 and operating condition 31 to determine health degradation 32. ML algorithm 42 may be a suitable type of mathematical model that, once trained on a dataset such as historical data 56, can be used to make predictions or classifications on new data (i.e., new durations 44 and operating conditions 31). During training, a learning algorithm may iteratively adjust the model's internal parameters to minimize errors in its predictions. ML algorithm 42 may be a fully trained model with all its internal parameters tuned. Alternatively or in addition, ML algorithm 42 may be continuously or periodically trained through active leaning based on new data included in historical data 56.

The ANN of ML algorithm 42 may include interconnected data processing units (i.e., artificial neurons) grouped in different layers: one input layer 58, one output layer 60, and one or more hidden layers 62. The connections (i.e. synapses) between the neurons may have adaptive weights according to the connection strength between two neurons. The connections may be used for data exchange between the neurons: the output of the neurons of one layer may be used as the input of the neurons of the next layer. The ANN may be trained by adjusting the weights of the synapses until a set of given input values results in the desired output values.

During training of ML algorithm 42, previous operating conditions and previous durations may be used as inputs 58 (shown in FIG. 5) to ML algorithm 42, and the health conditions (H1-H6) of historical data 56 may be used as respective corresponding outputs 60 (shown in FIG. 5).

In some embodiments, ML algorithm 42 may be configured to perform classification. For example, ML algorithm 42 may output one of a plurality of predefined values (e.g., indication of severity, degradation score) qualifying or quantifying health degradation 32 associated with operating condition 31 and duration 44.

In some embodiments, ML algorithm 42 may be configured to perform regression and may have a structure having a single output which may be a numerical value (e.g. percentage of expended health span) within a range (e.g., between 0-100%) quantifying health degradation 32 associated with operating condition 31 and duration 44.

In some embodiments, health degradation 32 of fuel nozzle 16 that is determined with ML algorithm 42 may be an incremental health degradation of fuel nozzle 16. Method 1000 may include updating a cumulative health degradation of fuel nozzle 16 (accumulated over one or more previous durations 44) since a previous service of fuel nozzle 16 by adding the incremental health degradation 32 of fuel nozzle 16 to the cumulative health degradation of fuel nozzle 16.

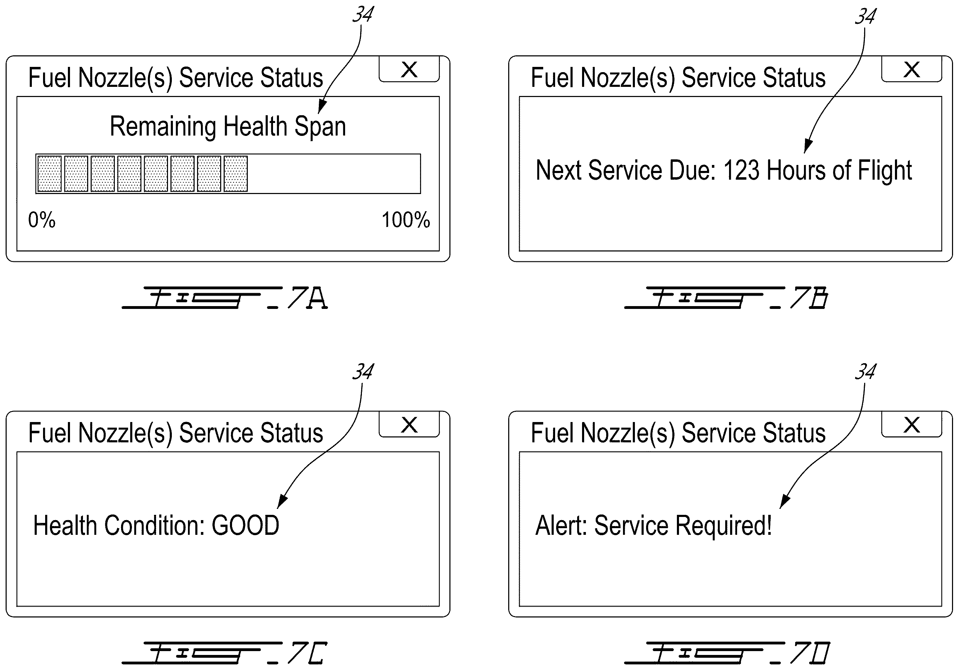

FIGS. 7A-7D are exemplary fuel nozzle service statuses 34 output from annunciator 46 of apparatus 14 for monitoring fuel nozzle 16. In some embodiments, service status 34 may be updated and output by annunciator 46 during operation of engine 10. For example, service status 34 may be updated and output by annunciator 46 substantially in real-time based on the current operation of engine 10. Alternatively, service status 34 may be determined off-line based on a past operation of engine 10.

FIG. 7A shows an example where service status 34 is indicative of a remaining health span of fuel nozzle 16 before a next service of fuel nozzle 16 is required. The remaining health span may be determined by subtracting the cumulative health degradation determined using ML algorithm 42 from 100%.

FIG. 7B shows an example where service status 34 is indicative of a predicted future utilization amount of fuel nozzle 16 remaining before a next service of fuel nozzle 16 is required. The predicted future utilization amount (e.g., number of hours of flight remaining) may be determined based on a cumulative duration associated with the cumulative health degradation and an extrapolation (i.e., assumption) using the health degradation rate (e.g., degradation per hour of flight) at which the current level of health degradation was reached.

FIG. 7C shows an example where service status 34 is indicative of an overall qualitative indication (e.g., "GOOD", "FAIR", "POOR") of the health of fuel nozzle 16. The qualitative indication may be selected based on the cumulative health degradation.

FIG. 7D shows an example where service status 34 is indicative of service of the fuel nozzle being required immediately. Such indication may be provided when the cumulative health degradation of fuel nozzle 16 has reached or exceeded a prescribed threshold. Such threshold may be selected to provide a margin intended to prevent malfunction of fuel nozzle 16 before the next opportunity to service fuel nozzle 16. For example, the threshold may be selected to provide a margin that allows engine 10 to complete the current flight cycle and/or to complete a limited number of flight cycles.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A fuel nozzle monitoring apparatus for a fuel nozzle of an aircraft engine, the apparatus comprising:
one or more sensors operable to respectively sense one or more parameters indicative of an operating condition of the aircraft engine applicable to a duration during which the fuel nozzle is delivering fuel to a combustor of the aircraft engine;
an annunciator; and
one or more computers in communication with the one or more sensors and with the annunciator, the one or more computers being operable to:
execute a machine learning algorithm that associates the operating condition of the aircraft engine and the duration with a health degradation of the fuel nozzle, the machine learning algorithm having been trained using machine learning on historical data associating previous operating conditions with previous fuel nozzle health degradations; and
cause the annunciator to annunciate a servicing status for the fuel nozzle based on the health degradation of the fuel nozzle.

2. The fuel nozzle monitoring apparatus as defined in claim 1, wherein:
the one or more sensors include a temperature sensor; and
the one or more parameters include a temperature of the fuel upstream of the fuel nozzle sensed with the temperature sensor.

3. The fuel nozzle monitoring apparatus as defined in claim 1 or 2, wherein:
the one or more sensors include a temperature sensor operatively connected to a body of the fuel nozzle; and
the one or more parameters include a temperature of the body of the fuel nozzle sensed with the temperature sensor.

4. The fuel nozzle monitoring apparatus as defined in claim 1, 2 or 3, wherein the one or more parameters include a fuel flow rate to the fuel nozzle or a temperature of the fuel upstream of the fuel nozzle, a fuel flow rate to the fuel nozzle, and a temperature of a body of the fuel nozzle.

5. The fuel nozzle monitoring apparatus as defined in any preceding claim, wherein the one or more parameters include a temperature of the combustor.

6. The fuel nozzle monitoring apparatus as defined in any preceding claim, wherein the one or more parameters include an air flow rate through a space between the aircraft engine and a nacelle housing the aircraft engine.

7. The fuel nozzle monitoring apparatus as defined in any preceding claim, wherein the one or more parameters include a temperature of air inside a space between the aircraft engine and a nacelle housing the aircraft engine.

8. The fuel nozzle monitoring apparatus as defined in any preceding claim, wherein:
the health degradation of the fuel nozzle is an incremental health degradation of the fuel nozzle; and
the one or more computers are operable to update a cumulative health degradation of the fuel nozzle since a previous service of the fuel nozzle by adding the incremental health degradation of the fuel nozzle to the cumulative health degradation of the fuel nozzle,
wherein, optionally, when the cumulative health degradation of the fuel nozzle has reached or exceeded a prescribed threshold, the servicing status annunciated by the annunciator includes an indication that service of the fuel nozzle is required immediately.

9. The fuel nozzle monitoring apparatus as defined in any preceding claim, wherein the servicing status annunciated by the annunciator indicates a remaining health span of the fuel nozzle before a next service of the fuel nozzle is required; and/or
wherein the servicing status annunciated by the annunciator indicates a predicted utilization amount of the fuel nozzle before a next service of the fuel nozzle is required.

10. A fuel system of an aircraft engine, the fuel system comprising:
a fuel nozzle operatively connected to supply fuel to a combustor of the aircraft engine during operation of the aircraft engine;
a sensor operable to sense an operating condition of the aircraft engine applicable to a duration of operation of the aircraft engine;
one or more data processors in communication with the sensor; and
non-transitory machine-readable memory storing instructions executable by the one or more data processors and configured to cause the one or more data processors to:
execute a machine learning algorithm to associate the operating condition of the aircraft engine and the duration with an incremental health degradation of the fuel nozzle, the machine learning algorithm having been trained using machine learning on historical data associating previous operating conditions with previous fuel nozzle health degradations;
update a cumulative health degradation of the fuel nozzle since a previous service of the fuel nozzle with the incremental health degradation of the fuel nozzle; and
generate an output indicative of a servicing status for the fuel nozzle based on the cumulative health degradation of the fuel nozzle.

11. The fuel system as defined in claim 10, wherein the operating condition includes a temperature of a skin of the fuel nozzle.

12. The fuel system as defined in claim 10 or 11, comprising a display device, wherein:
the instructions are configured to cause the display device to display the servicing status for the fuel nozzle; and
the servicing status includes one or more of the following: a predicted number of hours of operation of the aircraft engine before a next service of the fuel nozzle is required; a percentage of a remaining health span of the fuel nozzle before a next service of the fuel nozzle is required; and a service of the fuel nozzle being required immediately.

13. A method of monitoring a fuel nozzle of an aircraft engine, the method comprising:
supplying fuel to a combustor of the aircraft engine using the fuel nozzle during operation of the aircraft engine;
sensing an operating condition of the aircraft engine applicable to a duration during which the fuel nozzle is supplying fuel to the combustor;
executing a machine learning algorithm that associates the operating condition of the aircraft engine and the duration with a health degradation of the fuel nozzle, the machine learning algorithm having been trained using machine learning on historical data associating previous operating conditions with previous fuel nozzle health degradations; and
annunciating a servicing status for the fuel nozzle based on the health degradation of the fuel nozzle.

14. The method as defined in claim 13, wherein:
the health degradation of the fuel nozzle is an incremental health degradation of the fuel nozzle;
the method includes incrementing a cumulative health degradation of the fuel nozzle since a previous service of the fuel nozzle with the incremental health degradation of the fuel nozzle; and
the servicing status for the fuel nozzle is based on the cumulative health degradation of the fuel nozzle.

15. The method as defined in claim 13 or 14, wherein the operating condition includes:
a temperature of the fuel upstream of the fuel nozzle, a fuel flow rate to the fuel nozzle, and a temperature of a skin of the fuel nozzle; and /or
a temperature of the combustor; and /or
an air flow rate through a space between the aircraft engine and a nacelle housing the aircraft engine, and
a temperature of air inside the space between the aircraft engine and the nacelle.
